Europäisches Patentamt

**European Patent Office**

**Office européen des brevets**

(19)

(11) Publication number: **0 030 864**
**B1**

(12) **EUROPEAN PATENT SPECIFICATION**

(45) Date of publication of patent specification: **17.08.83**

(51) Int. Cl.³: **H 04 N 1/32, H 04 L 27/02**

(21) Application number: **80304533.5**

(22) Date of filing: **16.12.80**

(54) **Carrier wave recovery circuit.**

(30) Priority: **18.12.79 JP 163594/79**

(43) Date of publication of application:
**24.06.81 Bulletin 81/25**

(45) Publication of the grant of the patent:
**17.08.83 Bulletin 83/33**

(84) Designated Contracting States:
**DE FR GB**

(56) References cited:
**GB - A - 1 364 064**
**GB - A - 1 506 517**
**GB - A - 2 017 436**
**US - A - 3 614 639**

(73) Proprietor: **XEROX CORPORATION**
**Xerox Square - 020**
**Rochester New York 14644 (US)**

(72) Inventor: **Murayama, Tomio**
**C/O Fuji Xerox CO., LTD. 2274 Hongo**
**Ebina-shi Kanagawa-ken (JP)**
Inventor: **Miyao, Fumio**
**C/O Fuji Xerox CO., LTD. 2274 Hongo**
**Ebina-shi Kanagawa-ken (JP)**
Inventor: **Takeuchi, Shigefumi**
**C/O Nagano Nihon Musen K.K. 1163,**
**Shimohigano**
**Inasato-Machi Nagano-Shi Nagano-ken (JP)**
Inventor: **Tsukioka, Kazumi**
**C/O Nagano Nihon Musen K.K. 1163,**
**Shimohigano**
**Inasato-Machi Nagano-Shi Nagano-Ken (JP)**

(74) Representative: **Weatherald, Keith Baynes et al,**
**European Patent Attorney Rank Xerox Patent**
**Department 338 Euston Road**
**London NW1 3BH (GB)**

Courier Press, Leamington Spa, England

Carrier wave recovery circuit

The present invention relates in general to a carrier wave recovery circuit and, more particularly to a circuit wherein a carrier wave is reproduced by means of a digital synthesizer for use in the receiving portion of an image information transmitting apparatus such as facsimile.

With the increased emphasis on an automated office and the increased use and popularity of electronic apparatus in the office environment, reliable and high-quality information-transmitting apparatus, such as facsimile, is of greater importance. In known information-transmitting apparatus utilizing vestigial sideband (VSB) where a part of the carrier frequencies is suppressed, a signal synchronized in its frequency and phase angle with the carrier wave has been recovered and reproduced in a demodulator utilizing the phase-locked-loop (PLL) technique. In information-transmitting apparatus utilizing the analog PLL technique, various problems are encountered, which include a circuit that is susceptible to noise, a circuit that must be adjusted at too many locations or elements, and a circuit whose circuit constants are susceptible to variations and changes after a long period of usage.

The invention as claimed is intended to provide a remedy for the problems set forth above by providing a carrier wave recovery circuit characterised by:

an N-bit first counter for counting reference clock pulses for a period corresponding to $2^L$ (L is an integer) cycle periods of a carrier wave;

a first latch circuit operatively connected to said N-bit counter for holding the most-significant bits of the count of the N-bit counter;

a second latch circuit operatively connected to said N-bit counter for holding the least-significant bits of the count of the N-bit counter;

a frequency divider operatively connected to said first latch circuit and having an adjustable frequency-dividing ratio corresponding to a one-cycle period of the carrier wave, said frequency-dividing ratio being initially set by the output of said first latch circuit; and

a second counter operatively connected between said second latch and said frequency divider, said second counter providing an output to said frequency divider for correcting said frequency-dividing ratio, whereby the recovered carrier wave is output from said frequency-divider.

Thus the voltage controlled oscillator (VCO) of the conventional circuit is replaced for the purpose of digitalizing the entire circuit and providing advantageous features. The advantageous features include being highly stable and reliable, easy to manufacture and adaptable to being used in image-information transmitting apparatus such as facsimile. Since the circuit is of a digital nature, and since a discriminating function is assigned to a counter that determines the frequency-dividing ratio, any erroneous operation of the circuit can be avoided, even if an instantaneous interruption occurs in the image information transmission line. The digital construction of the circuit further affords advantageous features, such as reducing the number of adjusting points, enhancing the resistance to noise and power source variation and reducing the variation in value of the various circuit components after a long period of usage. Furthermore, since the circuit is free from frequency-drift, the circuit can be used for carrier waves of different frequencies and therefore economy of the circuit can be achieved.

One means for carrying out the invention is described in detail below with reference to the accompanying drawings, which illustrate only one specific embodiment, in which drawings:

Figure 1 is a simplified functional block diagram of a known phase-locked-loop circuit utilized in a conventional carrier wave recovery circuit;

Figure 2 is a simplified functional block diagram showing an embodiment of a carrier wave recovery circuit according to the present invention;

Figures 3A and 3B are simplified explanatory diagrams of the operation of an N-bit counter in the circuit shown in Figure 2; and

Figure 4 is a simplified schematic showing a practical embodiment of one portion of the inventive circuit shown in Figure 2.

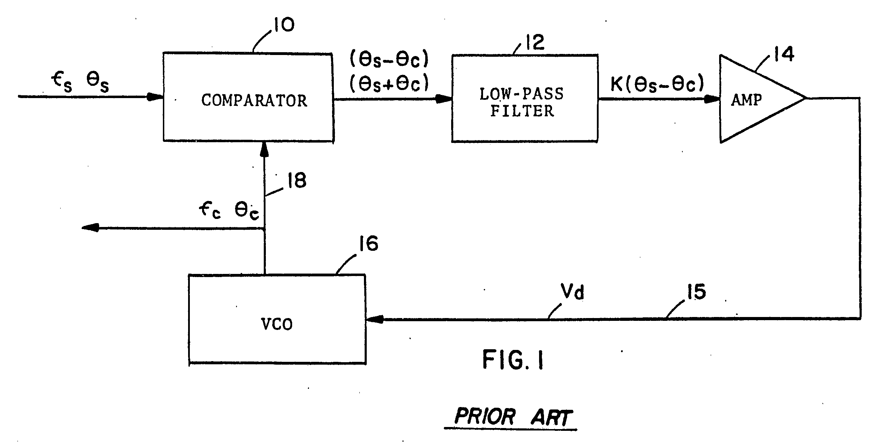

Referring now to Figure 1, there is illustrated a typical example of a known phase-locked-loop (PLL) circuit. In this circuit, a comparator 10 acts as a multiplier for two AC input signals having frequencies $f_s$ and $f_c$ and respective phases $\theta_s$ and $\theta_c$, and delivers, through a lowpass filter 12 and an amplifier 14, a voltage $V_d$ (on conductor 15), which is proportional to the variation in time of the detected phase difference $\theta_s \sim \theta_c$. A voltage-controlled oscillator (VCO) 16 is controlled by the voltage $V_d$ on conductor 15 so that the VCO 16 produces an output on conductor 18 of the frequency $f_c$, which is ultimately made equal to the frequency $f_s$ in the stabilized state of the circuit. In another example of this known circuit, where a phase comparator of the digital type is used, difficulties with the circuitry are still encountered. Since the output frequency of the voltage-controlled oscillator is still controlled by an analog voltage, the output frequency of the VCO is still susceptible to changes caused by noise and power source variations.

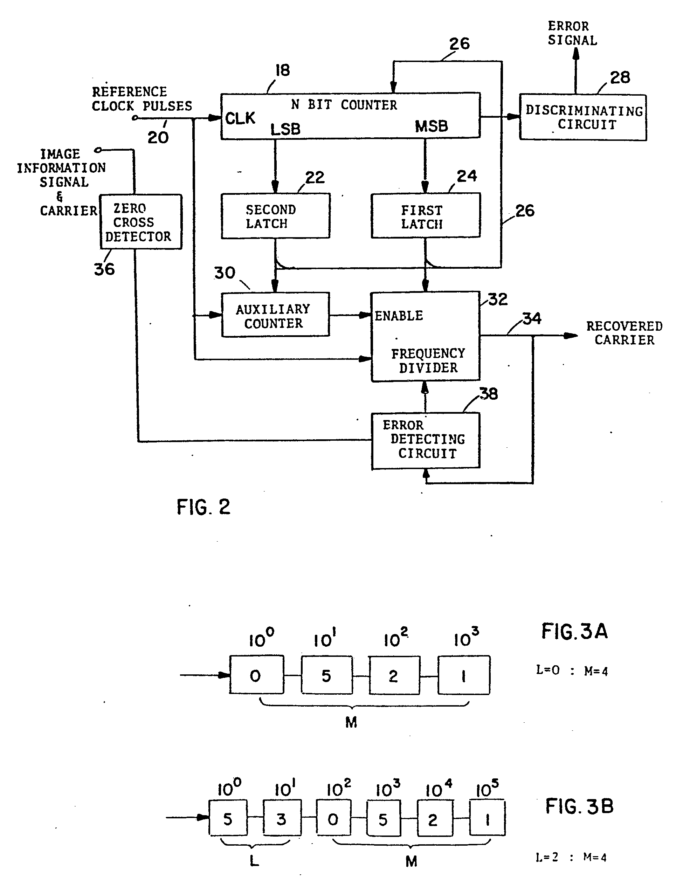

With reference to Figure 2, there is illustrated one embodiment of the present invention wherein a synthesizer is used instead of the phase-locked loop. In the operation of an image information transmitting apparatus, such as facsimile, there is a protocol period or synchronizing period (prior to the actual transmission of image information) during which signals relating only to the carrier component are transmitted. According to the present invention, reference clock pulses (CLK) arriving in a one-cycle period of the carrier wave are firstly counted during the synchronizing period for initial setting of the circuit, and fine correction of the set value is then carried out utilizing a received line synchronizing signal or a signal component obtained after the initiation of the image information transmission.

During the synchronizing period of the protocol time, an N-bit counter 18 counts reference clock pulses CLK arriving on conductor 20 from the local facsimile receiver in a period corresponding to $2^L$ (L is an integer) cycle periods of the carrier wave (first count), and the count of the N-bit counter 18 is held in latches 22 and 24. A complement of the number count held in the latches 22 and 24 is then preset in the N-bit counter 18 via cable 26. Then the clock pulses CLK on conductor 20 are again counted, as described above, by the N-bit counter 18, and when the result now counted is equal to the count of the first counting operation, a zero output signal id delivered from the counter 18 to a discrimination circuit 28. The discrimination circuit 28 investigates at a predetermined time whether the zero signal exists or not at its inlet. When a zero signal is not found, the discrimination circuit 28 delivers an instruction to circuitry in the local receiver (not shown) to resume the counting operation once again.

On the other hand, when a zero signal is found in the inlet to the discrimination circuit 28, M bits, excepting lower L bits within the count of the N bit counter 18, are stored in the latch 24. Assuming that $T_1$ represents a one-cycle period of the received carrier wave, and $T_2$ represents a one-cycle period of the clock pulse on conductor 20, and L and M satisfy following relation,

$$L + M = N \qquad (\text{L} = \text{least significant bits})$$

$$T_2 \times 2^M > T_1 \qquad (\text{M} = \text{most significant bits})$$

one cycle period $T_1$ is expressed under accompaniment of a quantizing error less than $\binom{+1}{-0}$ of a one-cycle period of the clock pulse CLK. Thus, if the frequency of the clock pulses CLK is divided by M, a recovered and reproduced carrier wave can be obtained with a quantized error less than one cycle period of the clock pulse CLK.

However, such an approximation tends to result in an excessive amount of error due to the accumulation of the quantizing errors. For overcoming the difficulty, an auxiliary counter 30 is further provided in the circuit shown in Figure 2 to prohibit the counting operation in the frequency divider 32 a number of times corresponding to the L bits stored in the latch 22, for every $2^L$ (L is an integer) cycle period of the received carrier wave, each time for a one-cycle period of the clock pulse CLK. As a result, the error in the newly-produced carrier wave on conductor 34 can be corrected or reduced to less than one cycle period of the clock pulse CLK for every $2^L$ cycle period of the received carrier wave.

The above-described operation will now be described in more detail. Although the N-bit counter 18 in this embodiment is of a binary type, the operational principle is the same for a binary counter and a decimal counter, and for the purpose of simplifying the description, the operation is described for the case of a decimal counter.

Now it is assumed that a number equal to 1250.35 of the reference clock pulses CLK is counted for each cycle period of the received carrier wave. In a case of L = 0 and M = 4, as shown in Figure 3A, the N-bit conunter 18 counts "1250", while the N-bit counter 18 counts "125035" in the other case shown in Figure 3B, where L = 2 and M = 4. In the latter case, the first latch 24 in the circuit shown in Figure 2 holds "1250" while the second latch 22 holds "35". That is, the first latch 24 holds a value "1250" obtained by discarding the lower two bits from the count of the N-bit counter 18, which value is accompanied with a quantized error of "0.35" less than one-cycle period of the reference clock pulse CLK, for every one-cycle period of the received carrier wave.

Accordingly, if the frequency-dividing ratio of the frequency divider 32 is set at the value "1250" held in the latch 24, a quantized error less than one cycle periods of the clock pulse CLK will be added in every three cycle period of the carrier wave. Thus, by simply delivering an inhibit signal from the auxiliary counter 30 in every three cycle periods of the carrier wave to the frequency divider 32, the quantized error can be reduced to less than one cycle period of the clock pulse for every 60 cycle period of the carrier wave. In other words, by inhibiting the operation of the frequency divider 32 35 times for each 100 cycle period of the carrier wave, the quantized error can be reduced to a value less than one cycle period of the clock pulse for every 100 cycle period of the carrier wave.

For the purpose of enabling the frequency of the recovered and reproduced carrier wave on conductor 34 to follow the slow variation of the frequency of the carrier wave in the transmitting side during the transmitting time, zero cross points of the received carrier wave included in the image information signal obtained from the transmission line are detected by a zero cross detector 36 or the like, and the deviation of the zero cross points and those of the reproduced carrier wave may be compared and discriminated by an error-detection circuit 38 for correcting the operation of the frequency divider 32 to correct the phase of the recovered carrier.

More practical examples of the N-bit counter 18, latches 22 and 24 and the discrimination circuit 28 and their operation will now be described in detail.

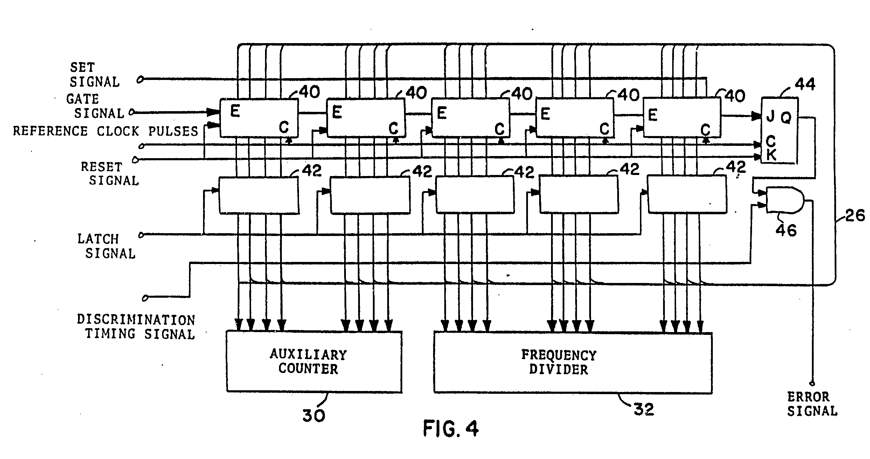

In Figure 4, the N-bit counter 18 is made of five 4-bit binary counters 40, the latches 22 and 24 are made of five 4-bit latches 42 each consisting of a D type flip-flop, and the discrimination circuit 28 is made of a JK flip-flop 44 and an AND gate 46. In each of the binary counters 40, E designates an enabling terminal, and C designates a carrying terminal.

At first, a reset signal is applied to the counters 40 and the JK flip-flop 44 to reset these circuits. Then a gate signal is applied to the counters 40 for enabling the counters to count a reference clock CLK for a period corresponding to 256 cycle periods of the received carrier wave.

When the gate signal is turned off, a latch signal is applied from outside to latch the latch circuits 42 so as to hold the counts of the counters 40 in the latches 42. The outputs of the latches 42 are the outputs of the counters 40 at the latched time, and the complement of the outputs of the latches is set by an external set signal into the counters 40.

When the setting operation terminates, a gate signal is again applied to the counters 12 for operating the counters 40 to count the clock pulses CLK for a time corresponding to 256 cycle periods of the received carrier wave. In the case when the first count is equal to the second count of the counter, each of the counters 40 is reset to zero, and a carry signal is delivered from the end terminal of the last stage counter 40 to the J terminal of the JK flip-flop 44.

After the termination of the second counting operation, a discrimination timing signal is applied to the gate 46 to open the same gate for delivering an output from the Q terminal of the JK flip-flop 44. When the output from the terminal Q, indicative of the result of the discrimination, is found to be allowable, a value corresponding to the required frequency-dividing ratio is set in the frequency divider 32, and a correction value, required for reducing the quantized error for the 256 cycle periods of the carrier wave to less than one cycle period of the clock pulse, is set in the auxiliary counter 30.

## Claims

1. A carrier wave recovery circuit characterised by:

an N-bit first counter (18) for counting reference clock pulses for a period corresponding to $2^L$ (L is an integer) cycle periods of a carrier wave;

a first latch circuit (24) operatively connected to said N-bit counter for holding the most-significant bits of the count of the N-bit counter;

a second latch circuit (22) operatively connected to said N-bit counter for holding the least-significant bits of the count of the N-bit counter;

a frequency divider (32) operatively connected to said first latch circuit and having an adjustable frequency-dividing ratio corresponding to a one-cycle period of the carrier wave, said frequency-dividing ratio being initially set by the output of said first latch circuit; and

a second counter (30) operatively connected between said second latch and said frequency divider, said second counter providing an output to said frequency divider for correcting said frequency-dividing ratio, whereby the recovered carreri wave is output from said frequency-divider.

2. The carrier wave recovery circuit as recited in claim 1, wherein the outputs of said first and second latch circuits are operatively connected (26) to said N-bit counter to set in said N-bit counter a complement of the count of the N-bit counter, for providing a discriminating function in said N-bit counter.

3. The carrier wave recovery circuit as recited in claim 1 or 2, including an error-detection circuit (38) operatively connected to said frequency divider to adjust the phase of the recovered carrier wave.

4. The carrier wave recovery circuit as recited in claim 3, further including a zero cross detector (36) operatively connected to said error-detection circuit, zero cross detector having an input signal which includes the image information signal and the receive carrier wave.

5. The carrier wave recovery circuit as recited in any preceding claim, including a discrimination circuit (28) operatively connected to the N-bit counter, said discrimination circuit providing an error signal as an output when the zero signal from the N-bit counter is not received at a predetermined time.

## Revendications

1. Circuit de rétablissement d'onde porteuse, caractérisé en ce qu'il comporte:
— un premier compteur à N bits (18) pour compter des impulsions d'horloge de référence pendant une durée correspondant à $2^L$ (L est un nombre entier) cycles d'une onde porteuse;
— un premier circuit à bascule (24) relié au compteur à N-bits pour conserver les bits de poids fort du comptage de ce compteur;
— un second circuit à bascule (22) relié au compteur à N bits pour conserver les bits de poids faible du comptage de ce compteur,
— un diviseur de fréquence (32) relié au premier circuit à bascule et ayant un rapport de division de fréquence ajustable correspondant à un cycle de l'onde porteuse, ce rapport étant initialement établi par la sortie du premier circuit à bascule; et
— un second compteur (30) branché entre la seconde bascule et le diviseur de fréquence, ce second compteur fournissant une sortie au diviseur de fréquence pour corriger le rapport de division de fréquence, d'où il résulte que l'onde porteuse rétablie est sortie au diviseur de fréquence.

2. Circuit de rétablissement d'onde porteuse selon la revendication 1, caractérisé en ce que les sorties des premier et second circuits à bascule sont reliées (26) au compteur à N bits pour établir dans ce compteur un complément du comptage du compteur à N bits, afin d'assurer une fonction de discrimination dans le compteur à N bits.

3. Circuit de rétablissement d'onde porteuse selon les revendications 1 ou 2, caractérisé en ce qu'il comprend un circuit de détection d'erreur (38) relié au diviseur de fréquence pour ajuster la phase de l'onde porteuse rétablie.

4. Circuit de rétablissement d'onde porteuse selon la revendication 3, caractérisé en ce qu'il comprend en outre un détecteur de passage par zéro (36) relié au circuit de détection d'erreur, ce détecteur de passage par zéro ayant un signal de sortie qui comprend le signal d'information d'image et l'onde porteuse reçue.

5. Circuit de rétablissement d'onde porteuse selon l'une quelconque des revendications précédentes, caractérisé en ce qu'il comprend un circuit de discrimination (28) relié au compteur à N bits, ce circuit de discrimination fournissant un signal d'erreur comme sortie lorsque le signal zéro provenant du compteur à N bits n'est pas reçu à un instant prédéterminé.

**Patentansprüche**

1. Eine Trägerwellen-Wiedergewinnungsschaltung, gekennzeichnet, durch einen ersten Zähler (18) mit N-Bits zum Zählen von Bezugstaktpulsen während einer Periodendauer, die $2^L$ (L ist eine ganze Zahl) Zyklus-Periodendauern einer Trägerwelle entspricht; eine erste Gatterschaltung (24), die in wirksamer Weise mit dem N-Bit-Zähler zum Halten der höherwertigen Bits der Zählung des N-Bit-Zählers verbunden ist; eine zweite Gatterschaltung (22), die in wirksamer Weise mit dem N-Bit-Zähler zum Halten der niedrigerwertigen Bits der Zählung des N-Bit-Zählers verbunden ist; einen Frequenzteiler (32), der in wirksamer Weise mit der ersten Gatterschaltung verbunden ist und ein einstellbares Frequenz-teilungsverhältnis hat, das der Periodendauer eines Zyklus der Trägerwelle entspricht, wobei das Frequenz-Teilungsverhältnis anfänglich durch den Ausgang der ersten Gatterschaltung festgesetzt wird; und einen zweiten Zähler (30), der in wirksamer Weise zwischen der zweiten Gatterschaltung und dem Frequenzteiler angeschlossen ist, wobei der zweite Zähler einen Ausgang an den Frequenzteiler zum Korrigieren des Frequenz-teilungsverhältnisses liefert, wobei die wieder-gewonnene Trägerwelle ein Ausgangssignal des Frequenzteilers ist.

2. Die Trägerwellen-Wiedergewinnungsschaltung nach Anspruch 1, in der die Ausgange der ersten und zweiten Gatterschaltungen in wirksamer Weise (26) mit dem N-Bit-Zähler verbunden sind, um in dem N-Bit-Zähler das Komplement der Zählung des N-Bit-Zählers zu setzen, um eine unterscheidende Funktion in dem N-Bit-Zähler zu schaffen.

3. Die Trägerwellen-Wiederherstellungs-schaltung nach Anspruch 1 oder 2, mit einer Irrtums-Erfassungsschaltung (38), die in wirksamer Weise mit dem Frequenzteiler verbunden ist, um die Phase der wiederhergestellten Trägerwelle einzustellen.

4. Die Trägerwellen-Wiederherstellungsschaltung nach Anspruch 3, ferner mit einem Nulldurchgangdetektor (36), der in wirksamer Weise mit der Irrtums-Erfassungsschaltung verbunden ist, wobei der Nulldurchgangdetektor ein Eingangssignal hat, das das Bildin-formationssignal und die empfangene Träger-welle umfaßt.

5. Die Trägerwellen-Wiederherstellungsschaltung nach einem der vorhergehenden Ansprüche, mit einer Unterscheidungsschaltung (28), die in wirksamer Weise mit dem N-Bit-Zähler verbunden ist, wobei Unterscheidungsschaltung ein Irrtumssignal als Ausgangssignal erzeugt, wenn der Nulldurchgang von dem N-Bit-Zähler nicht zu einer vor-bestimmten Zeit empfangen wird.

$\varepsilon_s\ \theta_s$ → COMPARATOR $\quad \dfrac{(\theta_s - \theta_c)}{(\theta_s + \theta_c)}$ → LOW-PASS FILTER $\quad K(\theta_s - \theta_c)$ → AMP

10

12

14

18

$\varepsilon_c\ \theta_c$

16

VCO

$V_d$

15

FIG. I

PRIOR ART

ERROR
SIGNAL

REFERENCE
CLOCK PULSES

18

26

28

CLK    N BIT COUNTER

LSB              MSB

DISCRIMINATING
CIRCUIT

IMAGE
INFORMATION
SIGNAL
&
CARRIER

20

ZERO
CROSS
DETECTOR

36

22

SECOND
LATCH

24

FIRST
LATCH

26

30

AUXILIARY
COUNTER

32

ENABLE

FREQUENCY
DIVIDER

34

RECOVERED
CARRIER

38

ERROR
DETECTING
CIRCUIT

FIG. 2

$10^0$   $10^1$   $10^2$   $10^3$

| 0 | 5 | 2 | 1 |

M

FIG. 3A

L=0 : M=4

$10^0$   $10^1$   $10^2$   $10^3$   $10^4$   $10^5$

| 5 | 3 | 0 | 5 | 2 | 1 |

L    M

FIG. 3B

L=2 : M=4

FIG. 4